# EUROPÄISCHE PATENTANMELDUNG

(11) **EP 4 349 565 A1**
(43) Veröffentlichungstag der Anmeldung: **10.04.2024**
(21) Anmeldenummer: 23199571.3
(22) Anmeldetag: 26.09.2023
(51) Int. Cl.: B29C 48/405, B29C 48/92, B29C 48/91, B29C 48/525, B29C 48/09, B29C 48/12, B29B 7/48

(54) **ANLAGE ZUR HERSTELLUNG EINES EXTRUDIERTEN SILIKON-HALBZEUGES, VERWENDUNG EINES GLEICHLAUFENDEN DOPPELSCHNECKENEXTRUDERS SOWIE VERFAHREN ZUR HERSTELLUNG EINES SILIKON-ROH-EXTRUDATES**

(30) Priorität: 06.10.2022 DE 102022210592
(71) Anmelder: Raumedic AG, 95213 Münchberg (DE)
(72) Erfinder: Oelschlegel, Alexander, 95176 Konradsreuth (DE); Wunderlich, Peter, 95138 Bad Steben (DE); Hager, Steffen, 95126 Schwarzenbach an der Saale (OT Martinlamitz) (DE); Scharf, Sebastian, 95111 Rehau (DE)
(74) Vertreter: Schmitt-Nilson Schraud Waibel Wohlfrom Patentanwälte Partnerschaft mbB

(57) **Zusammenfassung**

Eine Anlage (1) zur Herstellung eines extrudierten Silikon-Halbzeuges (2) hat eine Misch-/Extrusionsvorrichtung (4) zum Mischen und nachfolgenden Extrudieren eines Silikon-Compounds zur Herstellung eines Silikon-Roh-Extrudates (13). Eine Heizvorrichtung (17) der Anlage (1) dient zum Vernetzen des Roh-Extrudates (13) zum vernetzten Silikon-Halbzeug (2). Es resultiert eine Anlage, mit der ein entsprechendes Silikon-Halbzeug wirtschaftlicher hergestellt werden kann.

## Beschreibung

Der Inhalt der deutschen Patentanmeldung DE 10 2022 210 592.3 wird durch Bezugnahme hierin aufgenommen.

Die Erfindung betritt eine Anlage zur Herstellung eines extrudierten Silikon-Halbzeuges. Ferner betrifft die Erfindung eine Verwendung eines gleichlaufenden Doppelschneckenextruders sowie ein Verfahren zur Herstellung eines Silikon-Roh-Extrudates.

Die Herstellung eines extrudierten Silikon-Halbzeuges ist vom Markt her als ein batchweiser Prozess bekannt, bei dem vor einer Extrusion eines gemischten Silikon-Compounds ein batchweiser Misch/Knetprozess stattfindet.

Extrusionsvorrichtungen sind bekannt aus der AT 510 263 B1, der EP 2 580 042 B1, der AT 507 972 B1 und der EP 1 951 500 B1. Die WO 2014/028625 A1 beschreibt eine Vorrichtung und ein Verfahren zur Herstellung eines Silikonartikels. Die EP 1 558 437 B1 offenbart ein Verfahren zum Extrudieren von peroxidischen vernetzbaren Formteilen aus Kunststoff.

Es ist eine Aufgabe der vorliegenden Erfindung, eine Anlage zur Herstellung eines extrudierten Silikon-Halbzeuges zu schaffen, mit der ein entsprechendes Silikon-Halbzeug wirtschaftlicher hergestellt werden kann.

Diese Aufgabe ist erfindungsgemäß gelöst durch eine Anlage mit den im Anspruch 1 angegebenen Merkmalen.

Bei dem extrudierten Silikon-Halbzeug kann es sich um einen Schlauch oder um ein Profil handeln.

Erfindungsgemäß wurde erkannt, dass es möglich ist, mithilfe einer Misch-/Extrusionsvorrichtung ein Silikon-Roh-Extrudat herzustellen, welches zunächst noch unvernetzt ist und welches anschließend mithilfe der Heizvorrichtung der Anlage zum vernetzten Silikon-Halbzeug vernetzt wird. Mit einer derartigen Anlage kann das vernetzte Silikon-Halbzeug in einem kontinuierlichen Prozess hergestellt werden, was im Vergleich zum batchweisen Prozess des Standes der Technik wirtschaftlicher ist. Der Produktionsprozess kann vereinfacht werden. Der Output der Anlage ist verbessert. Im Vergleich zum batchweisen Prozess werden interne Logistikaufwendungen reduziert. Im Vergleich zum batchweisen Prozess kann eine Energieeinsparung ermöglicht werden.

Insbesondere entfällt beim Betrieb einer derartigen Anlage der batchweise Knetprozess des aus dem Stand der Technik bekannten Verfahrens.

Der Temperatur-Grenzwert von 60°C, den das Silikon-Compound beim Mischen und beim Extrudieren nicht übersteigt, vermeidet ein unerwünschtes Vernetzen des Silikon-Compouds bzw. des Silikon-Roh-Extrudates. Die Temperaturschwelle, die beim Mischen und beim Extrudieren unter Einsatz der Misch-/Extrusionsvorrichtung der Anlage nicht überschritten wird, kann je nach Ausführung bzw. je nach Betrieb der Anlage auch bei 58°C, bei 56°C, bei 54°C, bei 53°C, bei 51°C, bei 50°C, bei 45°C oder auch bei 40°C liegen. Regelmäßig ist diese Temperaturschwelle größer als 20°C.

Die Misch-/Extrusionsvorrichtung der Anlage kann so ausgeführt sein, dass ein Energieeintrag in das Silikon-Compound beim Mischen und beim Extrudieren insgesamt immer kleiner ist als 20 Wh/kg, kleiner ist als 10 Wh/kg und auch kleiner ist als 9 Wh/kg. Ein derartiger Energieeintrag ist regelmäßig größer als 1 Wh/kg.

Die Misch-/Extrusionsvorrichtung kann so ausgeführt sein, dass beim Mischen und beim Extrudieren des Silikon-Compounds eine Drehzahl mindestens einer Extruderwelle der Misch-/Extrusionsvorrichtung 150 Umdrehungen pro Minute nicht übersteigt. Ein derartiger Drehzahl-Schwellwert ist zum Vermeiden eines unerwünschten Vernetzens des Silikon-Compounds bzw. des Silikon-Roh-Extrudates besonders geeignet.

Die Misch-/Extrusionsvorrichtung kann so ausgeführt sein, dass nach dem Mischen und Extrudieren das noch nicht vernetzte Silikon-Roh-Extrudates derart gut homogenisiert vorliegt, dass ein Vernetzungsgrad, gemessen bei mehreren zufällig entnommenen Probenvolumina des Silikon-Roh-Extrudates jeweils bei Messzeiten erreicht wird, die um nicht mehr als +/- 10 % voneinander abweichen. Bei dieser Homogenität-Messung des Silikon-Roh-Extrudates kann eine Messung viskoelastischer Eigenschaften des Silikon-Roh-Extrudates gemäß der Norm DIN ISO 6502 erfolgen. Die Zeitspanne T₉₀, innerhalb der ein 90%iger Vernetzungsgrad erreicht wird, kann für jede individuelle Probe von einem Mittelwert, gemessen über alle entnommenen Proben-Volumina, um nicht mehr als 10 %, um nicht mehr als 8 %, um nicht mehr als 6 %, um nicht mehr als 5 %, um nicht mehr als 4 %, um nicht mehr als 3 %, um nicht mehr als 2 % oder auch um nicht mehr als 1 % abweichen.

Entsprechende Messzeitbedingungen können auch für eine Zeitspanne T₁₀ zum Erreichen einer 10 % Vernetzung des Silikon-Roh-Extrudates bei der viskoelastischen Messung oder auch für die Zeitspanne T₅₀ für das Erreichen einer 50 %igen Vernetzung des Silikon-Roh-Extrudates gelten.

Eine Vernetzung von beispielsweise 90 % ist gegeben, wenn eine Drehmomentaufnahme bei der viskoelastischen Messung gemäß DIN ISO 6502 90 % einer maximalen Drehmomentaufnahme bei 100 %iger Vernetzung entspricht. Die 100 %ige Vernetzung ergibt sich dabei als Plateauwert des Drehmoments über die Zeit.

Die Anlage kann eine Zuführvorrichtung zum Zugeben des im Regelfall noch unvermischten Silikon-Compounds und gegebenenfalls von Additiven, insbesondere von Vernetzer-Additiven, zur Misch-/Extrusionsvorrichtung aufweisen. Teil der Zuführvorrichtung kann mindestens eine Zuführeinrichtung sein, mit der eine Komponentenzugabe über einen jeweiligen Bereitstellungsbehälter erfolgen kann. Die Zuführvorrichtung und/oder die jeweilige Zuführeinrichtung kann als Trichter, kann als Presse, kann als Klappe, kann als Schneidvorrichtung oder kann als gravimetrischer Dosierer ausgeführt sein. Soweit mehrere Zuführeinrichtungen zum Einsatz kommen, können auch verschiedene dieser Varianten bei einer diese Zuführeinrichtungen aufweisenden Zuführvorrichtungen zum Einsatz kommen.

Das Silikon-Compound, das in der Anlage verarbeitet wird, kann im Ausgangszustand, also vor dem Mischen und dem Extrudieren oder auch nach dem Mischen und vor dem Extrudieren eine Viskosität von mehr als 4 x 10⁷ cp (Centipoise, 1 cP = 10⁻³ Pa s) aufweisen. Diese Viskosität kann größer sein als 5 x 10⁷ cp, kann größer sein als 7 x 10⁷ cp, und kann mindestens 9 x 10⁷ cp betragen. Regelmäßig ist diese Viskosität kleiner als 100 x 10⁷ cp.

Die Viskosität kann gemäß DIN ISO 6502 gemessen werden.

Eine Ausführung der Misch-/Extrusionsvorrichtung nach Anspruch 2 als gleichlaufender Doppelschneckenextruder hat sich überraschend als geeignet zur Herstellung des noch unvernetzten Silikon-Roh-Extrudates herausgestellt. Es hat sich dabei gezeigt, dass es möglich ist, einen derartigen gleichlaufenden Doppelschneckenextruder so zu betreiben, dass das Extrudat Vemetzungs-Temperaturgrenzen nicht erreicht.

Ein Doppelschneckenextruder nach Anspruch 3 hat sich besonders bewährt.

Eine weitere Aufgabe der Erfindung ist es, eine neue Verwendung eines gleichlaufenden Doppelschneckenextruders anzugeben.

Diese Aufgabe ist erfindungsgemäß gelöst durch eine Verwendung nach Anspruch 4 zur Herstellung eines Roh-Extrudates durch Mischen und nachfolgendes Extrudieren eines Silikon-Compounds.

Überraschend hat sich gezeigt, dass ein gleichlaufender Doppelschneckenextruder so betrieben werden kann, dass ein noch unvernetztes Silikon-Roh-Extrudat resultiert. Der gleichlaufende Doppelschneckenextruder wird dabei gleichzeitig zum Mischen und zum Extrudieren genutzt. Der gleichlaufende Doppelschneckenextruder wird mit noch unvermischtem Silikon-Compound, aufweisend mindestens ein Vernetzer-Additiv, gefüttert.

Die Vorteile einer Verwendung nach Anspruch 5 entsprechen denen, die vorstehend bereits erläutert wurden.

Eine weitere Aufgabe der Erfindung ist es, ein Verfahren zur Herstellung eines Silikon-Roh-Extrudates anzugeben.

Diese Aufgabe ist erfindungsgemäß gelöst durch ein Verfahren mit den im Anspruch 6 angegebenen Merkmalen.

Mithilfe dieses Verfahrens wird das Silikon-Roh-Extrudat in einem kontinuierlichen Prozess erzeugt, was im Vergleich zu einem Batch-Prozess Wirtschaftlichkeitsvorteile bietet, die vorstehend bereits erläutert wurden.

Insbesondere können geringe Massetemperaturen des Extrudats erzielt werden. Eine unerwünschte Vernetzung des hergestellten Silikon-Roh-Extrudates kann vermieden werden.

Eine Misch-Homogenität nach Anspruch 7 ist von besonderem Vorteil und ermöglicht die Herstellung eines Silikon-Roh-Extrudates sowie nachfolgend eines vernetzten, extrudierten Silikon-Halbzeuges hoher Qualität. Die Misch-Homogenität kann gemessen werden, indem bestimmt wird, wann ein vorgegebener Vernetzungsgrad, beispielsweise eine 90 %ige Vernetzung, erreicht ist. Hierbei kann ein Rheometer und ein Verfahren zur Vermessung viskoelastischer Eigenschaften gemäß DIN ISO 6502 zum Einsatz kommen. Eine Schwankung einer Misch-Homogenität um weniger als 10 % ist dabei gleichbedeutend mit einer Schwankungsbreite einer Zeitspanne, innerhalb der ein über die viskoelastischen Eigenschaften gemessener Vernetzungsgrad, z.B. T₉₀, erreicht wird. Eine Misch-Homogenität, die um weniger als 10 % schwankt, bedeutet dabei eine Misch-Homogenität des Silikon-Compounds bzw. des Silikon-Roh-Extrudates, bei dem bei mehreren zufällig entnommenen Proben-Volumina ein gegebener Vernetzungsrad bei einer um weniger als 10 % reproduzierbaren Zeitspanne erreicht wird. Die Misch-Homogenität kann um weniger als 5 %, um weniger als 2 % oder auch um weniger als 1 % schwanken. Ein Additiv-Anteil innerhalb des Silikon-Compounds kann um weniger als 2 % und kann auch um weniger als 1 % schwanken. Regelmäßig schwankt diese Misch-Homogenität bzw. dieser Anteil um mehr als 0,01 %.

Ein Temperaturgrenzwert nach Anspruch 8 vermeidet ein unerwünschtes Vernetzen des Silikon-Roh-Extrudates. Die Temperaturschwelle, die beim Mischen und beim Extrudieren unter Verwendung des Herstellungsverfahrens für das Silikon-Roh-Extrudat nicht überschritten wird, kann bei 58°C, bei 56°C, bei 54°C, bei 53°C, bei 51°C, bei 50°C, bei 45°C oder auch bei 40°C liegen. Regelmäßig ist diese Temperaturschwelle größer als 20°C. Ein Energieeintrag in das Silikon-Compound kann beim Mischen und beim Extrudieren in der Misch-/Extrusionsvorrichtung insgesamt immer kleiner sein als 20 Wh/kg, kann kleiner sein als 10 Wh/kg und kann auch kleiner sein als 9 Wh/kg.

Ein Drehzahl-Schwellwert nach Anspruch 9 hat sich beim Vermeiden eines unerwünschten Vernetzens des Silikon-Roh-Extrudates als besonderes geeignet herausgestellt.

Ein Ausführungsbeispiel der Erfindung wird nachfolgend anhand der Zeichnung näher erläutert. In dieser zeigen:
- Fig. 1: eine Anlage zur Herstellung eines extrudierten Silikon-Halbzeuges;
- Fig. 2: ein Verfahren zur Herstellung eines Silikon-Roh-Extrudates als Teil eines Verfahrens zur Herstellung eines extrudierten Silikon-Halbzeuges; und
- Fig. 3: in einer zu Fig. 1 ähnlichen Darstellung eine weitere Ausführung einer Anlage zur Herstellung eines extrudierten Silikon-Halbzeuges.

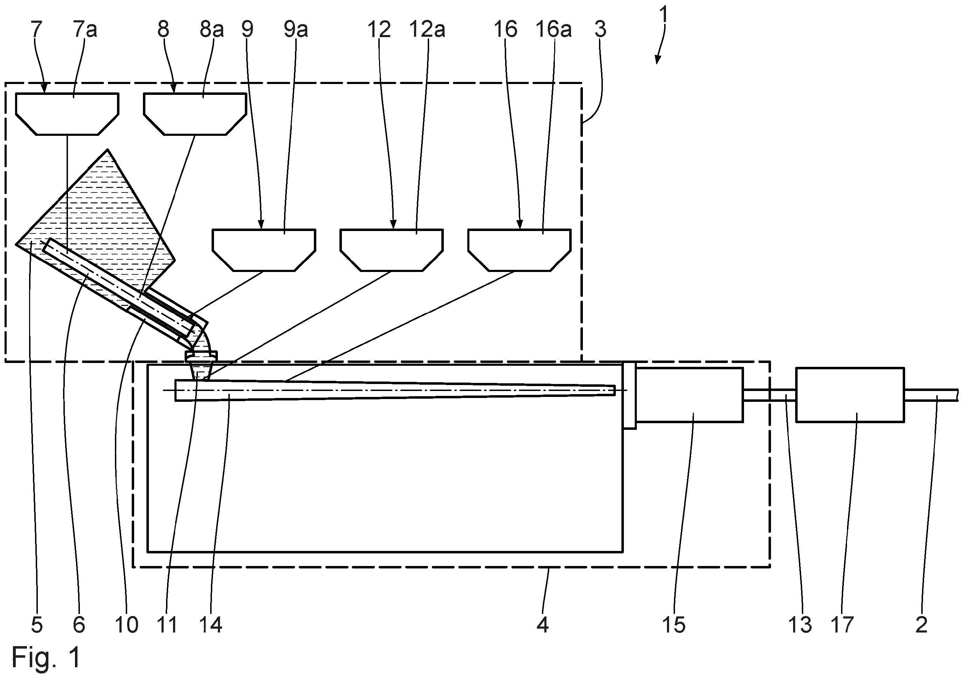

Fig. 1 zeigt eine Ausführung einer Anlage 1. Die Anlage 1 dient zur Herstellung eines extrudierten Silikon-Halbzeuges 2. Das extrudierte Silikon-Halbzeug 2 wird dabei als kontinuierliches Profil, beispielsweise als Schlauch, hergestellt.

Die Anlage 1 hat eine Zuführvorrichtung 3 zum Zugeben eines bereitgestellten, noch unvermischten Silikon-Compounds und Additiven, insbesondere Vernetzer-Additiven, zu einer Misch-/Extrusionsvorrichtung 4, die ebenfalls Bestandteil der Anlage 1 ist.

Die Zuführvorrichtung 3 versorgt die Misch-/Extrusionsvorrichtung 4 mit Silikon-Rohstoffen, Füllstoffen und Additiven. Über die Zuführvorrichtung 3 können diese Komponenten der Misch-/Extrusionsvorrichtung 4 an verschiedenen Stellen zugeführt werden, was nachfolgend noch erläutert wird. Insbesondere kann eine Zuführung im Bereich eines Einzuges, in einem Mischbereich und/oder in einem Austragsbereich der Misch-/Extrusionsvorrichtung 4 erfolgen.

Die Zuführvorrichtung 3 hat mindestens einen Zuführtrichter 5, der wiederum eine Zuführschnecke 6 aufweist. Dem Zuführtrichter 5 und der im Zuführtrichter 5 laufenden Zuführschnecke 6 werden über mehrere Zuführeinrichtungen 7, 8, 9 Rohstoffe des Silikon-Compounds sowie Additive zugegeben. Mithilfe der Zuführeinrichtung 7 erfolgt die Zugabe von einem Bereitstellungsbehälter 7a zu einem stromaufwärtigen Abschnitt der Zuführschnecke 6. Über die Zuführeinrichtung 8 erfolgt ein Zuführen von einem Bereitstellungsbehälter 8a hin zu einem mittleren Abschnitt der Zuführschnecke 6, der wiederum auf Höhe eines konisch verjüngten Auslassabschnitts des Zuführtrichters 5 angeordnet ist. Mittels der Zuführeinrichtung 9 erfolgt das Zuführen von einem Bereitstellungsbehälter 9 hin zu einem stromabwärtigen Abschnitt der Zuführschnecke 6, der in einer Schneckenhülse 10 läuft, die mit dem Abgabeende des Zuführtrichters 5 in Fluidverbindung steht.

Die Schneckenhülse 10 steht wiederum mit einem Zugabeport 11 der Misch/Extrusionsvorrichtung 4. Im Bereich des Zugabeports 11 erfolgt eine weitere Zugabe von Compoundbestandteilen sowie von Additiven über eine weitere Zuführeinrichtung 12 der Zuführvorrichtung 3 mit einem Bereitstellungsbehälter 12a.

Die Misch/Extrusionsvorrichtung 4 dient zum Mischen und nachfolgenden Extrudieren des über die Zuführvorrichtung 3 bereitgestellten, noch unvermischten Silikon-Compounds und der Additive zur Herstellung eines Silikon-Roh-Extrudates 13.

Die Misch-/Extrusionsvorrichtung 4 ist als gleichlaufender Doppelschneckenextruder ausgeführt. In der Fig. 1 ist eine der beiden Extruderwellen 14 dargestellt. Die beiden Extruderwellen 14 des Doppelschneckenextruders verjüngen sich konisch hin zu einer stromabwärtigen Extrusionsdüse 15 der Misch-/Extrusionsvorrichtung 4, die auch als Kopfwerkzeug bezeichnet ist.

Im Betrieb der Misch-/Extrusionsvorrichtung 4 tritt aus der Extrusionsdüse 15 das Silikon-Roh-Extrudat 13 aus.

In einem stromaufwärtigen Abschnitt der Extruderwellen 14 erfolgt eine weitere Zugabe von Rohstoffen des Silikon-Compounds beziehungsweise von Additiven über eine weitere Zuführeinrichtung 16 der Zuführvorrichtung 3 mit einem Bereitstellungsbehälter 16a.

Der Misch-/Extrusionsvorrichtung 4 nachgeordnet ist eine Heizvorrichtung 17 der Anlage 1 zum Vernetzen des Silikon-Roh-Extrudates 13 zum vernetzten, extrudierten Silikon-Halbzeug 2.

Die Herstellung des extrudierten, vernetzten Silikon-Halbzeuges 2 erfolgt mit der Anlage 1 kontinuierlich, also nicht batchweise.

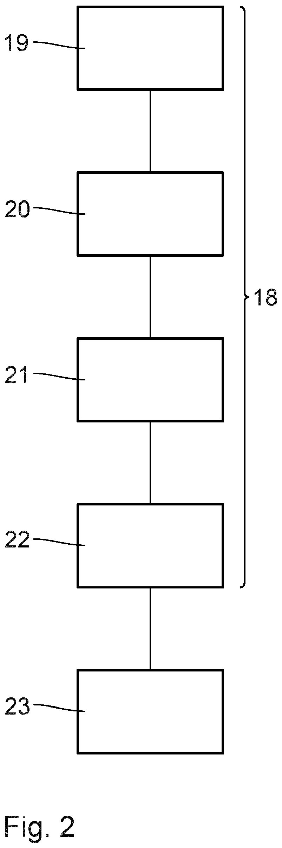

Anhand der Fig. 2 wird ein Herstellungsverfahren 18 zur Herstellung des Silikon-Roh-Extrudates 13 als Bestandteil eines Gesamtverfahrens zur Herstellung des extrudierten, vernetzten Silikon-Halbzeuges 2 beschrieben.

In einem Bereitstellungsschritt 19 wird das noch unvermischte Silikon-Compound zusammen mit dem mindestens einen Additiv bereitgestellt. Dies geschieht durch Befüllen der Bereitstellungsbehälter 7a, 8a, 9a, 12a und 16a mit entsprechenden Bestandteilen einerseits des Silikon-Compoundes, also mit entsprechenden Rohstoffen, sowie mit einem oder gegebenenfalls mehreren Additiven, insbesondere mit einem Vernetzer-Additiv. In den Bereitstellungsbehältern 7a, 8a, 9a, 12a und 16a können dabei verschiedene Zusammensetzungen von Rohstoffen und/oder Additiven bereitgestellt werden.

Im nachfolgenden kontinuierlichen Prozess wird die Zuführeinrichtung 3 und die Misch-/Extrusionsvorrichtung 4 in Betrieb genommen. In einem Zugabeschritt 20 erfolgt eine Zugabe des zunächst noch unvermischten Silikon-Compoundes sowie des mindestens einen Additivs zur Misch-/Extrusionsvorrichtung 4. Dies geschieht über die Zuführeinrichtungen 7, 8, 9, 12 und 16 der Zuführvorrichtung 3. Beim Betrieb der Zuführvorrichtung 3 rotiert die Zuführschnecke 6 im Zuführtrichter 5, sodass dort vorhandenes Silikon-Compound und mindestens ein dort gegebenenfalls zugegebenes Additiv aus dem Zuführtrichter 5 durch die Schneckenhülse 10 hin zum Zugabeport 11 der Misch-/Extrusionsvorrichtung 4 ausgetragen wird.

Nun erfolgt ein Mischen 21 des Silikon-Compounds einschließlich des mindestens einen Additivs in der Misch-/Extrusionsvorrichtung 4 durch den Betrieb der beiden Extruderwellen 14. Gemischt wird dabei zum einen das Compound, welches über den Zugabeport 11 den Extruderwellen 14 zugeführt wird, als auch zusätzliche Rohstoffe und/oder Additive, die den Extruderwellen 14 nach dem Zugabeport 11 über die mindestens eine weitere Zugabeeinrichtung 16 zugeführt werden.

Mittels der Misch/Extrusionsvorrichtung 4 erfolgt in einem Extrusionsschritt 22 ein Extrudieren des gemischten Silikon-Compounds einschließlich des mindestens einen Additivs über die Extrusionsdüse 15, sodass das noch unvernetzte Silikon-Roh-Extrudat 13 resultiert.

Als Ergebnis des Mischschritts 21 wird eine Misch-Homogenität des Silikon-Compounds einschließlich des mindestens einen Additivs erreicht, bei der ein Anteil des mindestens einen Additivs, insbesondere des Vernetzer-Additivs, innerhalb des Silikon-Compounds im Bereich der Extrusionsdüse 15 um weniger als 5 %, um weniger als 2 % und sogar um weniger als 1 % schwankt.

Ein Energieeintrag der Anlage 1 beim Mischen 21 und beim Extrudieren 22 in das Silikon-Compound einschließlich des mindestens einen Additivs ist während des gesamten Herstellungsprozesses kleiner als 20 Wh/kg, kleiner als 10 Wh/Kg und kann insbesondere kleiner sein als 9 Wh/kg und kann noch kleiner sein. Beim Mischen 21 und beim Extrudieren 22 übersteigt eine Temperatur des Silikon-Compounds einschließlich des mindestens einen Additivs in der Misch-/Extrusionsvorrichtung 4 53°C nicht. Diese Misch-/Extrusionstemperatur des Silikon-Compounds einschließlich des mindestens einen Additivs kann innerhalb der Extrusionsvorrichtung 4 höchstens 50°C, höchstens 45°C oder auch höchstens 40°C sein. Diese Temperatur ist regelmäßig größer als 20°C. Durch diese Misch-/Extrusionstemperatur wird erreicht, dass innerhalb der Extrusionsvorrichtung 4 kein unerwünschtes Vernetzen des Silikon-Roh-Extrudates 13 erfolgt.

Eine Drehzahl der Extruderwellen 14 überschreitet beim Mischen 21 und beim Extrudieren 22 einen Grenzwert von 150 Umdrehungen pro Minute nicht.

Der Doppelschneckenextruder der Misch-/Extrusionsvorrichtung 4 wird zur Herstellung des Roh-Extrudates 13 durch das Mischen 21 und das nachfolgende Extrudieren 22 des Silikon-Compounds einschließlich des mindestens einen Additivs verwendet.

Nach dem Austritt aus der Extrusionsdüse 15 wird das Silikon-Roh-Extrudat 13 in einem Vernetzungsschritt 23 mittels der Heizvorrichtung 17 zum vernetzten Silikon-Halbzeug vernetzt, was ebenfalls in einem kontinuierlichen Prozess erfolgt. Das Extrudat 13 durchläuft dabei die Heizvorrichtung 17 und tritt aus dieser als das vernetzte Silikon-Halbzeug 2 aus.

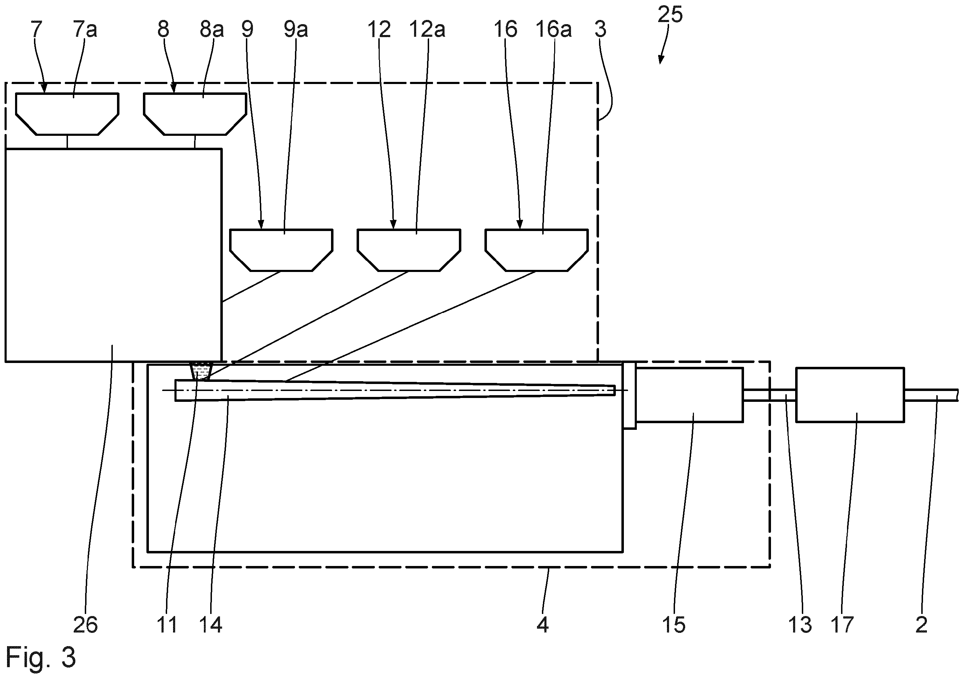

Fig. 3 zeigt eine weitere Ausführung einer Anlage 25 zur Herstellung eines extrudierten Silikon-Halbzeuges, die anstelle der Fig. 1 zum Einsatz kommen kann. Komponenten und Funktionen der Anlage 25, die vorstehend im Zusammenhang mit der Beschreibung der Anlage 1 anhand den Fig. 1 und 2 bereits erläutert wurden, tragen die gleichen Bezugsziffern und werden nicht nochmals im Einzelnen diskutiert.

Als Bestandteil der Zuführvorrichtung 3 hat die Anlage 25 eine Zuführeinrichtung 26.

Die Zuführvorrichtung 3 mit der Zuführeinrichtung 26 kann je nach Ausführung der Anlage 25 in Teilbereiche unterteilt sein, insbesondere in Teil-Zuführvorrichtungen für einzelne Komponenten oder Komponenten-Gruppen der zuzuführenden Komponenten, also der Silikon-Rohstoffe, der Füllstoffe und der Additive.

Die Zuführeinrichtung 26 kann je nach Ausführung eine Vormischeinheit zum Vormischen der Silikon-Rohstoffe, der Füllstoffe und der Additive aufweisen. Die Zuführeinrichtung 26 führt die Silikon-Rohstoffe, die Füllstoffe und die Additive der Misch-/Extrusionsvorrichtung 4 mit konstantem Massenfluss und/oder mit konstantem Volumenfluss kontinuierlich zu. Es ergibt sich in Verbindung mit der Misch-/Extrusionsvorrichtung 4 ein insgesamt kontinuierlicher Herstellungsprozess für das Roh-Extrudat 13 und/oder das vernetzte Silikon-Halbzeug 2. Für das Roh-Extrudat 13 beziehungsweise das Silikon-Halbzeug 2 können sich entsprechend konstante Misch- und Homogenitätseigenschaften ergeben.

## Patentansprüche

1. Anlage (1) zur Herstellung eines extrudierten Silikon-Halbzeuges (2),
- mit einer Misch-/Extrusionsvorrichtung (4) zum Mischen und nachfolgenden Extrudieren eines Silikon-Compounds einschließlich eines Vernetzer-Additivs zur Herstellung eines Silikon-Roh-Extrudates (13),
- mit einer Heizvorrichtung (17) zum Vernetzen des Roh-Extrudates (13) zum vernetzten Silikon-Halbzeug (2),
- wobei die Misch-/Extrusionsvorrichtung derart ausgeführt ist, dass beim Mischen (21) und beim Extrudieren (22) eine Temperatur des Silikon-Compounds 60° nicht übersteigt.

2. Anlage nach Anspruch 1, **dadurch gekennzeichnet, dass** die Misch-/Extrusionsvorrichtung (4) als gleichlaufender Doppelschneckenextruder ausgeführt ist.

3. Anlage nach Anspruch 2, **dadurch gekennzeichnet, dass** sich Extruderwellen (14) des Doppelschneckenextruders zu einer Extrusionsdüse (15) hin konisch verjüngen.

4. Verwendung eines gleichlaufenden Doppelschneckenextruders zur Herstellung eines Roh-Extrudates (13) durch Mischen und nachfolgendes Extrudieren eines Silikon-Compounds.

5. Verwendung eines Doppelschneckenextruders nach Anspruch 4, wobei sich Extruderwellen (14) des Doppelschneckenextruders zu einer Extrusionsdüse (15) hin konisch verjüngen.

6. Verfahren (18) zur Herstellung eines Silikon-Roh-Extrudates (13) mit folgenden Schritten:
- Bereitstellen (19) eines noch unvermischten Silikon-Compounds, aufweisend mindestens ein Vernetzer-Additiv,
- Zugeben (20) des Silikon-Compounds zu einer Misch-/Extrusionsvorrichtung (4),
- Mischen (21) des Silikon-Compounds in der Misch-/Extrusionsvorrichtung (4),
- Extrudieren (22) des gemischten Silikon-Compounds mittels der Misch-/Extrusionsvorrichtung (4).

7. Verfahren nach Anspruch 6, **dadurch gekennzeichnet, dass** als Ergebnis des Misch-Schritts (21) eine Misch-Homogenität des Silikon-Compounds erreicht wird, bei der ein Anteil des Vernetzer-Additivs innerhalb des Silikon-Compounds um weniger als 10 % schwankt.

8. Verfahren nach Anspruch 6 oder 7, **dadurch gekennzeichnet, dass** beim Mischen (21) und beim Extrudieren (22) eine Temperatur des Silikon-Compounds 60°C nicht übersteigt.

9. Verfahren nach einem der Ansprüche 6 bis 8, **dadurch gekennzeichnet, dass** die Misch-/Extrusionsvorrichtung (4) mindestens eine Extruderwelle (14) aufweist, wobei beim Mischen (21) und beim Extrudieren (22) des Silikon-Compounds eine Drehzahl der mindestens einen Extruderwelle (14) 150 Umdrehungen pro Minute nicht übersteigt.
